# EUROPÄISCHE PATENTSCHRIFT

(11) **EP 1 081 898 B1**
(45) Veröffentlichungstag und Bekanntmachung des Hinweises auf die Patenterteilung: **01.03.2006**
(21) Anmeldenummer: 00117981.1
(22) Anmeldetag: 22.08.2000
(51) Int. Cl.: B60R 25/00

(54) **Kraftfahrzeug mit in verschiedenen Modi betreibbaren Steuergeräten**
Motor vehicle with control units operating in various modes
Véhicule automobile avec une unité de commande en modes multiples

(30) Priorität: 04.09.1999 DE 19942368
(43) Veröffentlichungstag der Anmeldung: 07.03.2001
(73) Patentinhaber: ADAM OPEL AG, 65423 Rüsselsheim (DE)
(72) Erfinder: Milke, Burkhard, Dr.-Ing., 63071 Offenbach (DE); Reuter, Udo, Dipl.-Ing., 55278 Dalheim (DE); Nix, Axel, Dipl.-Ing., 65913 Wiesbaden (DE)
(74) Vertreter: Daniel, Ulrich W.P.

(56) Entgegenhaltungen:
- EP-A- 0 841 779
- EP-A- 0 863 639
- US-A- 5 808 375

## Beschreibung

Die Erfindung bezieht sich auf ein Kraftfahrzeug mit den Oberbegriff des Patentanspruchs 1 angegebenen Merkmalen, wie es beispielsweise aus EP 0 872 786 A1 oder EP 0 863 639 A1 bekannt ist. Bei der hohen elektrisch-/elektronischen Ausstattung heutiger Fahrzeuge ist der elektrische Leistungsbedarf hoch. Zur Verringerung dieses Bedarfes sind Steuergeräte des Fahrzeugs in einen Stand-by-Modus schaltbar, aus dem sie bei Fahrzeugbenutzung weckbar sind, was vorteilhaft ist. In der US 5,808,375 ist ein elektronisches Steuersystem beschrieben, bei dem in einem Wartungsmodus des Fahrzeuges nur ausgewählte Schlösser zu öffnen sind, während bestimmte abschließbare "private Fächer" nur nach Eingabe eines zentralen Freischaltecodes zugänglich sind. Allgemeine Verfahren zum Ein- und Ausschalten einer Gruppe von elektronischen Geräten in einem Stromsparmodus sind aus der EP 0 814 779 A2 bekannt.

Diverse, mit dem Fahrzeugvertrieb in Zusammenhang stehende Probleme sind mit diesen Lösungen jedoch nicht zu beseitigen. Nach der Fahrzeugproduktion werden Fahrzeuge in großen Mengeneinheiten zusammengefasst auf Parkplätzen, Eisenbahnzügen oder Schiffen abgestellt, wo hier meist Spediteure die Verantwortung für die Fahrzeuge tragen. Bei den oft beengten Verhältnissen und durch nicht speziell geschultes Personal kann es zu Beschädigungen oder zu unerwünschten Fehlfunktionen kommen. Aus diesem Grunde werden Fahrzeuge heute beispielsweise mit Folien teilweise zugeklebt und bestimmte Sicherungen werden gezogen, um bestimmte Fahrzeugausstattungen außer Betrieb zu setzen. Es ist jedoch kaum nachvollziehbar, ob Sicherungen zwischenzeitlich wieder eingesetzt wurden, wer Folien entfernt hat und wer evtl. auch Ausstattungsgegenstände aus einem Fahrzeugkofferraum entnommen hat.

Es ist Aufgabe der Erfindung hier Abhilfe zu schaffen und ein Kraftfahrzeug derart zu gestalten, das ein Vertrieb unter reproduzierbaren Bedingungen mit geringem Risiko für Beschädigungen, Fehlbedienungen und Diebstahl möglich ist.

Zur Lösung dieser Aufgabe zeichnet sich das Fahrzeug durch die im Patentanspruch 1 angegebenen Merkmale aus. Weitere Einzelheiten der Erfindung ergeben sich aus den Patenansprüchen 2 bis 9.

Das Fahrzeug ist nunmehr in einen speziell an die Belange des Vertriebs angepassten Logistik-Modus zu versetzen, in dem nur einige der vorhandenen Steuergeräte ihre normale Funktion ausüben und andere Steuergeräte vollständig deaktiviert/blockiert/abgeschaltet sind. Damit kann das Fahrzeug unter exakt reproduzierbaren Bedingungen an den Spediteur übergeben werden. Wird das Fahrzeug von dem Logistik-Modus in einen normalen Betriebsmodus umgeschaltet (worauf weiter unten detaillierter eingegangen wird), wird der Zeitpunkt des Verlassens des Logistik-Modus in einem elektronischen Speicher des Kraftfahrzeugs unveränderbar archiviert. Dieser Zeitpunkt ist dann bei Bedarf auslesbar. Bei der Übergabe des Fahrzeugs vom Spediteur an den Empfänger ist vorzugsweise von außen erkennbar, ob sich das Fahrzeug noch im Logistik-Modus befindet (beispielsweise durch Leuchten einer Kontrolllampe). Ist dies der Fall, gestaltet sich die Abnahmekontrolle des Fahrzeugs wesentlich einfacher, da bestimmte Kontrollen nicht durchgeführt werden müssen. Anderenfalls kann der Zeitpunkt des Verlassens des Logistik-Modus reproduziert und die Verantwortlichkeit für Mängel bestimmt werden.

Das Fahrzeug ist auf verschiedene Weise in den Logistik-Modus versetzbar:
- nach Abschluss der Produktion durch Bandendeprogrammierung,
- durch Programmierung von einem externen Diagnosegerät aus in autorisierten Werkstätten,
- durch Fernprogrammierung mittels eines autorisierten Telematikdienstes.

Aus diesem Logistik-Modus ist das Fahrzeug vorzugsweise durch eine bestimmte vorgegebene Bedienhandlung, die normalerweise nicht auszuführen ist, in den normalen Betriebsmodus versetzbar (beispielsweise gleichzeitige Betätigung beider Lenkstockschalter in bestimmter Weise). Diese Umschaltung kann jedoch auch automatisch vorgenommen werden. Dies erfolgt von einem Steuergerät, das im Logistik-Modus nicht abgeschaltet ist, wenn ein bestimmtes Kriterium erreicht ist, vorzugsweise wenn:
- sich das Fahrzeug über eine bestimmte vorgegebene Zeit im Logistik-Modus befunden hat,
- der Tankfüllstand im Kraftstofftank einen bestimmten Wert überschreitet,
- von einem Navigationssystem des Fahrzeugs eine bestimmte vorgegebene Navigationsinformation vorliegt oder
- wenn ein bestimmter Kilometerstand am Fahrzeugtacho überschritten wird.

Diese Kriterien werden derart festgelegt, dass aus ihnen eine Beendigung von Vertriebshandlungen abzuleiten ist.

Im Logistik-Modus sollen nur die notwendigsten Funktionen des Kraftfahrzeugs, die auch beim Vertrieb gegeben sein müssen, aktivierbar sein. So muss das Fahrzeug beispielsweise sicher fahrbar sein. Abgeschaltet werden jedoch vornehmlich die folgenden Funktionen/Steuergeräte, so dass zugehörige elektrische Verbraucher nicht ansteuerbar sind:
- eine Zentralverriegelung (Türen und Hauben sind ausschließlich einzeln mittels Schlüssel zu ver-/entriegeln.),
- ein Schließsystem des Fahrzeugs (Mittels Schlüssel ist ausschließlich eine Fahrertür zu öffnen. Alle anderen Türen und Hauben sind blockiert. So wird der Diebstahl von Ausstattungsgegenständen aus dem Kofferraum und das Zusammenschlagen von Türen bei eng abgestellten Fahrzeugen verhindert. Es kann davon ausgegangen werden, dass ausschließlich der Fahrersitz benutzt und ggf. beschmutzt wird.),
- eine Alarmanlage (Das Ansprechen von Alarmanlagen bei Fahrzeug-Transporterschütterungen wird verhindert.),
- ein Funkempfänger (Fernbetätigungen des Fahrzeugs werden ausgeschlossen.),
- ein Radio (Gewünschte Grundeinstellungen bleiben erhalten.),
- eine Uhr (Diese wird erst am Bestimmungsort synchronisiert.) und/oder
- eine Klimaanlage (Gewünschte Grundeinstellungen bleiben erhalten. Ein Stand-by-Betrieb ist abgeschaltet.).

Somit ist der Fahrzeugvertrieb unter ganz exakt definierten Bedingungen durchführbar. Das Risiko von Beschädigungen, Fehlhandlungen und Diebstahl ist mit sehr geringem Aufwand reduziert.

Unabhängig von der Einstellung des Fahrzeugs in den Logistik-Modus oder normalen Betriebsmodus können aktive Steuergeräte wie bekannt zur Reduzierung des elektrischen Leistungsbedarfs automatisch in einen Stand-by-Modus versetzt werden, wie dies aus dem eingangs genannten Stand der Technik bekannt ist. Somit ist auch der Ruhestromverbrauch der Fahrzeuge gering.

## Patentansprüche

1. Kraftfahrzeug mit mehreren untereinander kommunikationsfähigen Steuergeräten zur Ansteuerung elektrischer Verbraucher, wobei die Steuergeräte in verschiedenen einstellbaren Modi eine unterschiedliche Funktionalität aufweisen, wobei die Steuergeräte durch zentrale Befehle umschaltbar sind zwischen einem Logistik-Modus und einem normalen Betriebsmodus, wobei im Logistik-Modus einige Steuergeräte vollständig blockiert/abgeschaltet sind, und andere Steuergeräte zur Ausübung ihrer normalen Funktion freigeschaltet sind, und wobei im Betriebsmodus alle Steuergeräte ihre normale, an sich bekannte Funktionen ausüben, **dadurch gekennzeichnet, dass** der Zeitpunkt des Verlassens des Logistik-Modus in einem elektronischen Speicher des Kraftfahrzeugs unveränderbar archiviert wird und von dort auslesbar ist

2. Kraftfahrzeug nach Anspruch 1, **dadurch gekennzeichnet, dass** der Logistik-Modus nach Abschluss der Produktion des Fahrzeugs durch eine Bandendeprogrammierung eingestellt wird und ein Umschalten in den normalen Betriebsmodus durch Vornahme einer bestimmten Bedienhandlung am Kraftfahrzeug möglich ist.

3. Kraftfahrzeug nach Anspruch 1 oder 2, **dadurch gekennzeichnet, dass** der Logistik-Modus mittels eines an das Kraftfahrzeug angeschlossenen externen Diagnosegerätes einstellbar ist und ein Umschalten in den normalen Betriebsmodus durch Vornahme einer bestimmten Bedienhandlung am Kraftfahrzeug möglich ist.

4. Kraftfahrzeug nach einem der Ansprüche 1 bis 3, **dadurch gekennzeichnet, dass** der Logistik-Modus mittels einer Telematikeinheit fern-einstellbar ist.

5. Kraftfahrzeug nach Anspruch 1 oder 4, **dadurch gekennzeichnet, dass** von einem im Logistik-Modus aktiven Steuergerät selbsttätig eine Botschaft zur Beendigung des Logistik-Modus aktiviert wird, wenn
- sich das Fahrzeug eine vorgegebene Zeit lang im Logistik-Modus befunden hat,
- der Tankfüllstand des Fahrzeugs einen bestimmten Wert überschreitet,
- eine bestimmte Navigationsinformation vorliegt, oder
- ein bestimmter Kilometerstand am Tacho überschritten wird.

6. Kraftfahrzeug nach einem der Ansprüche 1 bis 5, **dadurch gekennzeichnet, dass** im Logistik-Modus
- eine Zentralverriegelung,
- eine Alarmanlage,
- ein Funkempfänger,
- ein Radio,
- eine Uhr und/oder
- eine Klimaanlage
des Fahrzeugs vollständig abgeschaltet sind.

7. Kraftfahrzeug nach einem der Ansprüche 1 bis 6, **dadurch gekennzeichnet, dass** im Logistik-Modus ausschließlich eine Fahrertür des Fahrzeugs mittels Schlüsselbetätigung zu öffnen ist, wobei alle anderen Fahrzeugöffnungen verriegelt bleiben und auch manuell nicht entriegelbar sind.

8. Kraftfahrzeug nach einem der Ansprüche 1 bis 7, **dadurch gekennzeichnet, dass** die Einstellung des Logistik-Modus vom Fahrzeugäußeren her erkenntlich ist.

9. Kraftfahrzeug nach einem der Ansprüche 1 bis 8, **dadurch gekennzeichnet, dass** die im Logistik-Modus aktiven Steuergeräte und die sich im normalen Betriebsmodus befindlichen Steuergeräte in an sich bekannter Weise selbsttätig in einen Stand-by-Modus schaltbar und aus diesem weckbar sind.

## Claims

1. Motor vehicle having a plurality of control units capable of communicating with one another for activating electricity-consuming items of equipment, wherein the control units in various settable modes have a different functionality, wherein the control units can be switched by means of central commands between a logistics mode and a normal operating mode, wherein in the logistics mode some control units are fully blocked/disconnected, and other control units are enabled to exercise their normal function, and wherein in the operating mode all of the control units exercise their normal, as such known functions, **characterized in that** the instant of exiting from the logistics mode is filed invariably in an electronic memory of the motor vehicle and is readable from there.

2. Motor vehicle according to claim 1, **characterized in that** the logistics mode is set on completion of manufacture of the vehicle by conveyor end programming and a changeover to the normal operating mode is possible by effecting a specific operation at the motor vehicle.

3. Motor vehicle according to claim 1 or 2, **characterized in that** the logistics mode is settable by means of an external diagnostic unit connected to the motor vehicle and a changeover to the normal operating mode is possible by effecting a specific operation at the motor vehicle.

4. Motor vehicle according to one of claims 1 to 3, **characterized in that** the logistics mode is settable remotely by means of a telematics unit.

5. Motor vehicle according to claim 1 or 4, **characterized in that** a control unit active in the logistics mode automatically activates a message to terminate the logistics mode when
- the vehicle has been in the logistics mode for a defined length of time,
- the filling level of the fuel tank exceeds a specific value,
- specific navigation information is provided, or
- a specific mileage reading on the speedometer is exceeded.

6. Motor vehicle according to one of claims 1 to 5, **characterized in that** in the logistics mode
- central locking,
- an alarm system,
- a wireless receiver,
- a radio,
- a clock and/or
- an air-conditioning system
of the vehicle are fully disconnected.

7. Motor vehicle according to one of claims 1 to 6, **characterized in that** in the logistics mode exclusively a driver's door of the vehicle is openable by means of key actuation, wherein all other vehicle openings remain locked and even manually are not unlockable.

8. Motor vehicle according to one of claims 1 to 7, **characterized in that** the setting of the logistics mode is recognizable from the exterior of the vehicle.

9. Motor vehicle according to one of claims 1 to 8, **characterized in that** the control units active in the logistics mode and the control units situated in the normal operating mode are in an as such known manner switchable automatically into and out of a standby mode.

## Revendications

1. Véhicule automobile comprenant des appareils de commande, aptes à la communication mutuelle, pour la commande de consommateurs électriques, les appareils de commande présentant, en des modes réglables, différents, une fonctionnalité différente, les appareils de commande étant commutables, par des ordres centraux, entre un mode logistique et un mode de fonctionnement normal, sachant que, en mode logistique, quelques appareils de commande sont complètement bloqués/mis hors service et que d'autres appareils de commande sont commutés pour fonctionner librement, pour exercer leurs fonctions normales et, en mode en fonctionnement, tous les appareils de commande exercent leurs fonctions normales, connues en soi, **caractérisé en ce que** le moment d'abandon du mode logistique est archivé dans une mémoire électronique du véhicule automobile et peut y être lu.

2. Véhicule automobile selon la revendication 1, **caractérisé en ce que** le mode logistique après achèvement de la production du véhicule est réglé au moyen d'une programmation de fin de chaîne et une commutation en mode de fonctionnement normal est possible, en procédant à une manipulation déterminée sur le véhicule automobile.

3. Véhicule automobile selon la revendication 1 ou 2, **caractérisé en ce que** le mode logistique est réglable au moyen d'un appareil de diagnostic externe, raccordé au véhicule automobile, et une commutation en mode de fonctionnement normal est possible, en procédant à une manipulation déterminée sur le véhicule automobile.

4. Véhicule automobile selon l'une des revendications 1 à 3, **caractérisé en ce que** le mode logistique est réglable à distance à l'aide d'une unité télématique.

5. Véhicule automobile selon la revendication 1 ou 4, **caractérisé en ce que**, d'un appareil de commande activé en mode logistique, automatiquement un message d'achèvement du mode logistique est activé, lorsque :
- le véhicule s'est trouvé pendant une durée prédéterminée en mode logistique,
- le niveau de remplissage du réservoir du véhicule dépasse une valeur déterminée
- une information de navigation déterminée est présente, ou
- un kilométrage déterminé sur le compteur est dépassé.

6. Véhicule automobile selon l'une des revendications 1 à 5, **caractérisé en ce que**, en mode logistique :
- un verrouillage central,
- une installation d'alarme,
- un récepteur radio,
- une radio,
- une horloge et/ou
- une installation de climatisation
du véhicule sont complètement mis hors service.

7. Véhicule automobile selon l'une des revendications 1 à 6, **caractérisé en ce qu'**en mode logistique doit être ouverte exclusivement une portière de véhicule en utilisant un actionnement par clé, sachant que toutes les autres ouvertures du véhicule restent verrouillées et, également, ne peuvent être déverrouillées manuellement.

8. Véhicule automobile selon l'une des revendications 1 à 7, **caractérisé en ce que** le réglage du mode logistique est identifiable depuis l'extérieur du véhicule.

9. Véhicule automobile selon l'une des revendications 1 à 8, **caractérisé en ce que** les appareils de commande, actifs en mode logistique, et les appareils de commande se trouvant en mode de fonctionnement normal, de manière connue en soi, peuvent être commutés automatiquement en un mode de faible consommation (*stand-by*) et être réveillés depuis ce mode.
